# EUROPEAN PATENT SPECIFICATION

(11) **EP 2 796 979 B1**
(45) Date of publication and mention of the grant of the patent: **21.03.2018**
(21) Application number: 13179088.3
(22) Date of filing: 02.08.2013
(51) Int. Cl.: G06F 3/0488

(54) **Method and apparatus for adjusting a graphical object according to operator preference**
Verfahren und Vorrichtung zur Einstellung eines graphischen Objekts nach Bedienerpräferenz
Procédé et appareil permettant de régler un objet graphique selon la préférence de l'opérateur

(30) Priority: 27.04.2013 CN 201310153836; 10.05.2013 WO PCT/CN2013/075463
(43) Date of publication of application: 29.10.2014
(73) Proprietor: Spreadtrum Communications (Shanghai) Co., Ltd., Shanghai 201203 (CN)
(72) Inventor: Xia, Lu, 201203 Shanghai (CN); Yin, Linna, 200063 Shanghai (CN)
(74) Representative: Loyer & Abello

(56) References cited:
- GB-A- 2 320 783
- JP-A- 2012 199 888
- US-A- 5 402 152
- US-A- 5 825 675
- US-A1- 2007 236 460
- US-A1- 2010 097 331
- ANONYMOUS: "Method and system to automatically adjust pointer sensitivity dependent on movement velocity for precisely positioning of the cursor", RESEARCH DISCLOSURE, no. 448, 1 August 2001 (2001-08-01), page 1406, Havant, UK, article No. 448136

## Description

### FIELD OF THE DISCLOSURE

This disclosure relates to human-computer interfaces in general and to method and apparatus for adjusting a graphical object according to operator preference.

### BACKGROUND OF THE DISCLOSURE

Human-computer interfaces provide important means for users to interact with a wide range of computing devices, such as desktop computers, laptop computers, tablet computers, smart phones, etc. Existing human-computer interfaces may include user input devices, such as a mouse, keyboard, or touchpad, which receive user inputs. For example, a conventional touchpad device may operate according to a multi-touch algorithm to detect a user's hand gestures. The conventional touchpad device may not, however, allow the user to configure the device to suit different preferences of different hands. Therefore, there is a need for a human-computer interface that may be configured to suit difference preferences by different users.

Patent Publication No.US20070236460A1 discloses a method and apparatus for user interface adaptation.

ANONYMOUS: "Method and system to automatically adjust pointer sensitivity dependent on movement velocity for precisely positioning of the cursor", RESEARCH DISCLOSURE, no. 448, 1 August 2001 (2001-08-01), page 1406,Havant, UK, article No. 448136, discloses automatically adjusting pointer sensitivity dependent on its velocity.

Japanese Patent Publication No. 2012199888A discloses a portable terminal which can determine a user's dominant hand with high accuracy to improve operability.

Patent Publication No.US5402152A1 discloses a method and apparatus for configuring an interface within a pen based computer.

### SUMMARY OF THE DISCLOSURE

The invention is as set out in the independent claims.

one embodiment, a method for adjusting a graphical object according to operator preference is provided. The method includes: rendering a graphical object on a display screen of a handheld device; determining a preference setting indicating one of a left-handed preference or a right-handed preference for operating the handheld device; and adjusting the graphical object according to the preference setting; the pre-configured angle is determined based on a value according to motions of a user's hand, and the smaller the motion of user's hand is, the smaller the value for the pre-configured angle is; and the larger the motion of user's hand is, the larger the value for the pre-configured angle is.

In another embodiment, a computer-readable medium is provided. The computer-readable medium includes instructions, which, when executed by a processor, cause the processor to perform a method for adjusting a graphical object according to operator preference. The method includes: rendering a graphical object on a display screen of a handheld device; determining a preference setting indicating one of a left-handed preference or a right-handed preference for operating the handheld device; and adjusting the graphical object according to the preference setting.

In still another embodiment, an apparatus for adjusting a graphical object according to operator preference is provided. The apparatus includes: a storage module configured to store instructions; an input module configured to receive user inputs; an output module configured to generate a graphical user interface including a plurality of graphical objects; and a processor configured to determine a preference setting indicating one of a left-handed preference or a right-handed preference for operating the apparatus and adjust the graphical objects according to the preference setting.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of a computing device according to one embodiment;
Fig. 2A illustrates operation of the computing device by a left-handed user;
Fig. 2B illustrates operation of the computing device by a right-handed user; and
Fig. 3 illustrates a flow diagram of a process for adjusting the computing device according to a user's preference.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented or stated. The implementations set forth in the following description of exemplary embodiments do not represent all implementations consistent with the invention. Instead, they are merely examples of systems and methods consistent with aspects related to the invention as recited in the appended claims.

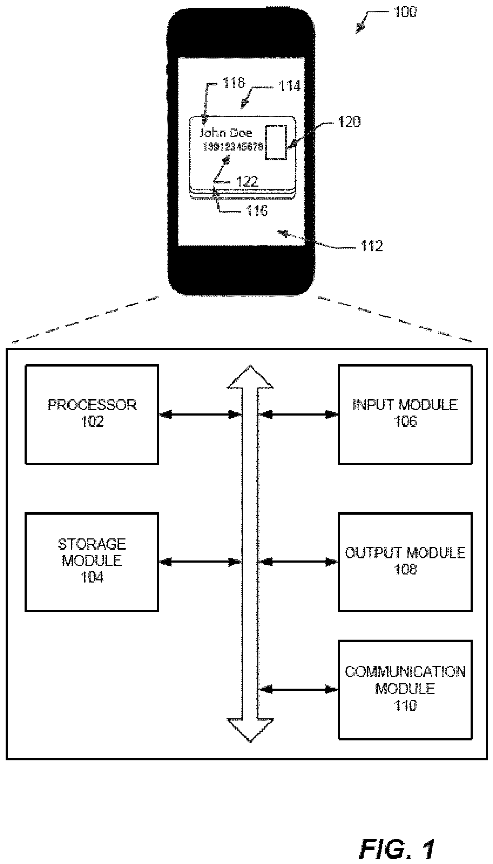

Fig. 1 illustrates an exemplary computing device 100 that may be adjusted according to a user's preference, according to an embodiment. Computing device 100 may be a desktop, laptop, smart phone, tablet, or other computing device known in the art. More particularly, device 100 includes a processor 102, also known as a central processing unit (CPU), a storage module 104, an input module 106, an output module 108, and a communication module 110. Processor 102 may be an INTEL processor, an AMD processor, or any other processing unit known in the art, and configured to process user inputs and execute computer-executable instructions to operate device 100.

Storage module 104 may include a hard drive, a flash drive, an optical drive, a random-access memory (RAM), a read-only memory (ROM), or any other computer-readable medium known in the art. Storage module 104 is configured to store data and the computer-executable instructions relevant to the operation of device 100. Storage module 104 also stores computer-executable instructions associated with a plurality of applications. The applications, when executed by processor 102, cause device 100 to operate as the user desires. The user may select the applications to perform functions including, for example, making telephone calls, playing music or videos, navigating, etc.

Input module 106 may include a keyboard, a keypad, a mouse, a joystick, a button, a thumbwheel, a touch screen, or any other input device, which is configured to receive inputs from a user. In one embodiment, input module 106 includes a touch screen 112, which is configured to detect the user's hand gestures or hand motions and convert the user's hand gestures or hand motions to electronic signals for controlling the operation of device 100.

Output module 108 may include a display device, a speaker, a vibration generator, or other output device. Output module 108 is configured to provide the user with user feedback. For example, the display device can be coupled to processor 102 to receive signals and generate a graphical user interface including a plurality of graphical elements. The graphical elements may include icons associated with the individual applications stored in storage module 104. When the user selects an application to execute, processor 102 executes the selected application and cause the display device to generate graphical interfaces relevant to the application.
According to a further embodiment, touch screen 112 is configured to operate as input module 106 as well as output module 108. Touch screen 112 receives user inputs through the hand motions of the user and generates user outputs through the graphical interfaces displayed thereon.

Communication module 110 may be configured to communicate with a telephone network, a wireless cellular network, or a computer network as known in the art. For example, communication module 110 may include a modem configured to provide network communication with a telephone network or a wireless cellular network. Alternatively, communication module 110 may include an Ethernet interface, a Wi-Fi interface, or a Bluetooth interface to provide network communication with an Ethernet, a local area network (LAN), a wide area network (WAN), or any other computer networks.

According to a further embodiment, when the user operates device 100 through touch screen 112 by using, for example, hands or fingers, processor 102 detects a particular motion of the user's hands or fingers according to the electronic signals generated by touch screen 112. For example, based on the electronic signals generated by touch screen 112 in response to such motion, processor 102 detects a swiping motion, a circular motion, or a tapping motion of the user's hands or fingers with respect to touch screen 112. Processor 102 then interprets the detected motions and generates control signals corresponding to the detected motions to control the operation of device 100.

According to a further aspect of the disclosure, processor 102 determines a preference setting of device 100 indicating whether the user operates device 100 under a right-handed preference or a left-handed preference. For example, when device 100 is a handheld computing device, such as a smart phone or a tablet, the user may prefer to or be required to operate device 100 using only the right hand or the left hand through touch screen 112.

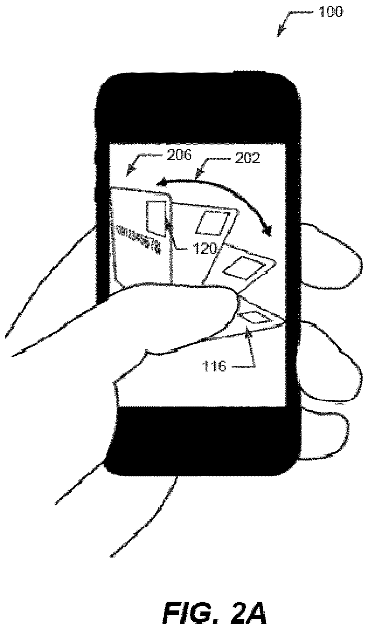

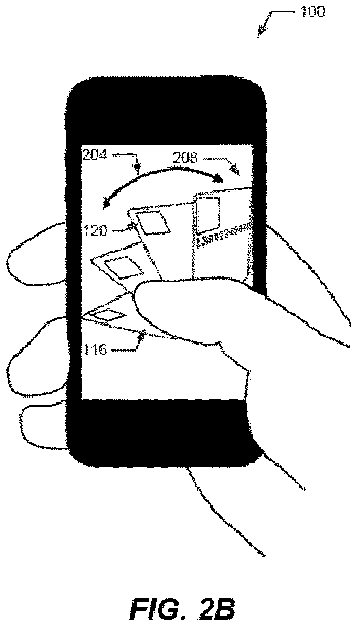

According to one embodiment, processor 102 determines the preference setting based on the motions of the user's fingers with respect to touch screen 112. As shown in Figs. 2A and 2B, for example, when the user operates device 100 using only the left hand (Fig. 2A) or the right hand (Fig. 2B), the left hand or right hand generates different motions 202 and 204, respectively, due to their physical and mechanical limitations. Thus, by analyzing motions 202 and 204, processor 102 determines whether the user uses the left hand or the right hand to operate device 100.

According to another embodiment, processor 102 determines whether the user intends to operate device 100 under the right-handed preference or the left-handed preference based on a user input. For example, processor 102 causes touch screen 112 to display a user interface for the user to set the preference setting to the right-handed preference or the left-handed preference. According to this embodiment, the user interface includes a menu, a check box, or a button for the user to select the preference setting. Upon receiving the user selection, processor 102 interprets the motions detected by touch screen 112 according to the selected preference setting.

According to a further aspect of the disclosure, processor 102 adjusts the operation of device 100 according to the preference setting. For example, upon detecting the preference setting, processor 102 adjusts the graphical user interface generated by touch screen 112 to suit the selected preference and allow the user to operate device 100 using the left hand or the right hand relatively easier and more efficiently.

Referring back to Fig. 1, for example, processor 102 executes an application installed on device 100 and causes touch screen 112 to display a graphical object 114 including a plurality of elements 116. According to one embodiment, each element 116 of graphical object 114 is a simulated contact card including contact information of a person or entity associated with the user. The contact information includes, for example, a name 118, a photo 120, a telephone number 122, an email address, or other information of the person or entity. Thus, graphical object 114 may be a simulated business card holder, which allows the user to flip through elements 116 by swiping a finger across touch screen 112. Alternatively, graphical object 114 is a simulation of a book, a calendar, or a note pad including a plurality of pages presented by individual elements 116.

When graphical object 114 is initially generated, touch screen 112 displays individual elements 116 in a front view with the top element shown in its entirety and other elements obscured in part or in whole by the top element. Referring to Figs. 2A and 2B, upon determining the preference setting, processor 102 adjusts graphical object 114 to a different view according to the preference setting. For example, when processor 102 detects the left-handed preference indicating that the user operates device 100 using only the left hand (Fig. 2A), processor 102 adjusts graphical object 114 to a left-handed oblique view 206 by rotating object 114 to the left by a pre-configured angle. Thus, when the user swipes the thumb of the left hand across touch screen 112, processor 102 causes individual elements 116 to flip in succession accordingly. Since object 114 is rendered in left-handed oblique view 206, the motion of individual elements 116 is consistent with the swiping motion of user's left hand as if the user is manipulating a stack of the physical card objects or paper documents.

Similarly, when processor 102 detects the right-handed preference indicating that the user operates device 100 using only the right hand (Fig. 2B), processor 102 adjusts graphical object 114 to a right-handed oblique view 208 by rotating object 114 to right by a pre-configured angle. Thus, when the user swipes the thumb of the right hand across touch screen 112, processor 102 causes individual elements 116 to flip accordingly. Since object 114 is rendered in right-handed oblique view 208, the motion of individual elements 116 is consistent with the swiping motion of user's right hand as if the user is manipulating a stack of physical card objects or paper documents.

According to a further aspect of the disclosure, processor 102 determines the pre-configured angle based on a value provided by the user. Processor 102 causes touch screen 112 to display a user interface for the user to input the value for the pre-configured angle. Alternatively, processor 102 determines the value for the pre-configured angle according to the motion of the user's hand. For example, when the motion of the user's hand is relatively small, processor 102 sets a relatively smaller value for the pre-configured angle. When the motion of the user's hand is relatively large, processor 102 sets a relatively larger value for the pre-configured angle.

According to a still further aspect of the disclosure, processor 102 causes touch screen 112 to display a three-dimensional (3D) scene including a plurality of 3D objects. The 3D objects may be individually adjusted according to the user's hand motion as described above. Each 3D object may be rendered in the front view, the left-handed oblique view, or the right-handed oblique view. Processor 102 further changes each of the 3D objects among different views. For example, when the user selects an object in the 3D scene by double tapping the selected object on touch screen 112, processor 102 changes the selected object from the front view to an oblique view or from one oblique view to another oblique view. Alternatively, processor 102 changes the view of the selected object when the user explicitly sets the preference setting to the left-handed preference or the right-handed preference. Still alternatively, processor 102 changes the view of the selected object upon detecting the motion made by the left hand or the right hand of the user.

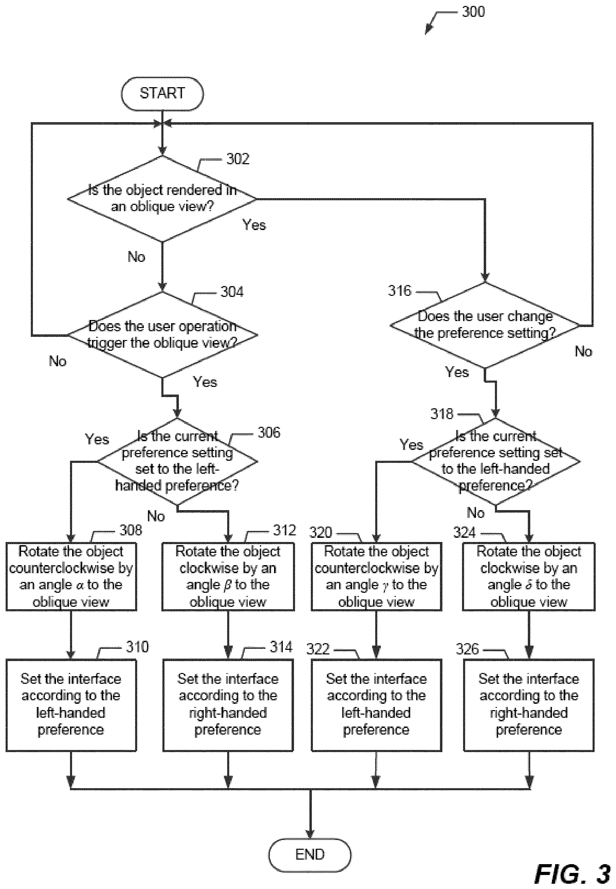

Fig. 3 depicts a flow chart of a process 300 for adjusting the operation of device 100 according to the user's preference. Process 300 is performed by processor 102 according to the computer-executable instructions in storage medium 104. According to process 300, at step 302, processor 102 determines whether a graphical object, such as object 114, is already rendered in an oblique view. More specifically, when the graphical object is initiated, it may be displayed in a front view. Alternatively, the graphical object may be initially displayed in the oblique view according to the preference setting pre-set by the user.

If processor 102 determines that the graphical object is not currently rendered in the oblique view ("No" at step 302), processor 102 further determines whether a user operation triggers the oblique view at step 304. The oblique view may be triggered by a variety of user operations as discussed above. For example, when the user selects the object by double tapping the selected object on touch screen 112, processor 102 changes the selected object from the front view to an oblique view. Alternatively, processor 102 changes the selected object from the front view to the oblique view when the user explicitly sets the preference setting to the left-handed preference or the right-handed preference. Still alternatively, processor 102 changes the selected object from the front view to the oblique view upon detecting the motion made by the left hand or the right hand of the user, causing the selected object to be moved within the 3D scene.

If processor 102 determines at step 304 that the user operation does not trigger the oblique view, process 300 proceeds back to step 302. If, on the other hand, processor 102 determines at step 304 that the user operation triggers the oblique view, processor 102 further determines whether the current preference setting is set to the left-handed preference at step 306. Processor 102 sets the current preference setting according to an explicit input from the user or according to the motions of the user's hands or fingers.

If processor 102 determines that the current preference setting is set to the left-handed preference at step 306, processor 102 then causes the selected object to be rotated to the left (i.e., counterclockwise when viewed from top) by an angle α to the left-handed oblique view (Fig. 2A) at step 308. The angle α is determined according to a user input or a pre-configured parameter.

At step 310, processor 102 further sets the graphical elements of the user interface according to the left-handed reference. For example, processor 102 re-arranges or relocates the icons, buttons, or menus of the user interface to an area of touchscreen 112 that are relatively easier to access by the user using the left hand. In one embodiment, the graphical elements of the user interface are relocated to the right side or the bottom-right corner of touchscreen 112, so that the user may access the graphical elements using the left thumb when operating device 100 using only the left hand. In another embodiment, as shown in Fig. 2A, photo 120 or other relevant contact information shown on each simulated contact card 116 is displayed on the right side of contact card 116 so that the user may view it when flipping through the simulated contact card holder.

If processor 102 determines that the current preference setting is not set to the left-handed preference at step 306, processor 102 then causes the selected object to be rotated to the right (i.e., clockwise when viewed from top) by an angle β to the right-handed oblique view (Fig. 2B) at step 312. Similarly to the angle α, the angle β is determined according to a user input or a pre-configured parameter. According to a further embodiment, the angle α and the angle β may be set to the same value.

At step 314, processor 102 further sets the graphical elements of the user interface according to the right-handed reference. For example, processor 102 re-arranges or relocates the icons, buttons, or menus of the user interface to an area of touchscreen 112 that are relatively easier to access by the user using the right hand. In one embodiment, the graphical elements of the user interface are relocated to the left side or the bottom-left corner of touchscreen 112, so that the user may access the graphical elements using the right thumb when operating device 100 using only the right hand. In another embodiment, as shown in Fig. 2B, photo 120 or other relevant contact information shown on each simulated contact card 116 is displayed on the left side of contact card 116 so that the user may view it when flipping through the simulated contact card holder.

Referring back to step 302, if processor 102 determines that the graphical object is already rendered in the oblique view according to the preference setting, process 300 proceeds to step 316. At step 316, processor 102 determines whether the user changes the preference setting between the left-handed preference and the right-handed preference. If the user does not change the preference setting ("No" at step 316), process 300 proceeds back to step 302. If, on the other hand, the user changes the preference setting ("Yes" at step 316), processor 102 determines whether the current preference setting is set to the left-handed preference at step 318.

If processor 102 determines that the current preference setting is set to the left-handed preference at step 318, processor 102 then causes the selected object to be rotated from right to left (i.e., counterclockwise when viewed from top) by an angle γ to the left-handed oblique view (Fig. 2A) at step 320.

At step 322, processor 102 further sets the graphical elements of the user interface according to the left-handed reference. For example, processor 102 re-arranges or relocates the icons, buttons, or menus of the user interface to an area of touchscreen 112 that are relatively easier to access by the user using the left hand. In one embodiment, the graphical elements of the user interface are relocated to the right side or the bottom-right corner of touchscreen 112, so that the user may access the graphical elements using the left thumb when operating device 100 using only the left hand. In another embodiment, as shown in Fig. 2A, photo 120 or other relevant contact information shown on each simulated contact card 116 is displayed on the right side of contact card 116 so that the user may view it when flipping through the simulated contact card holder.

If processor 102 determines that the current preference setting is not set to the left-handed preference at step 318, processor 102 then causes the selected object to be rotated from left to right (i.e., clockwise when viewed from top) by an angle δ to the right-handed oblique view (Fig. 2B) at step 324. Similarly to the angles α and β, the angles γ and δ are determined according to user inputs or pre-configured parameters. According to a further embodiment, the angles γ and δ may be set to the same value. According a still further embodiment, the angle α is one half of the angle γ, and the angle β is one half of the angle δ. According to a still further embodiment, the angles α, β, γ, and δ are set according to the perspective of the 3D scene rendered on touch screen 112. Thus, the rotation of the selected object is consistent with the perspective of the 3D scene as viewed by the user.

At step 326, processor 102 further sets the graphical elements of the user interface according to the right-handed reference. For example, processor 102 re-arranges or relocates the icons, buttons, or menus of the user interface to an area of touch screen 112 that are relatively easier to access by the user using the right hand. In one embodiment, the graphical elements of the user interface are relocated to the left side or the bottom-left corner of touch screen 112, so that the user may access the graphical elements using the right thumb when operating device 100 using only the right hand. In another embodiment, as shown in Fig. 2B, photo 120 or other relevant contact information shown on each simulated contact card 116 is displayed on the left side of contact card 116 so that the user may view it when flipping through the simulated contact card holder.

It will be appreciated that the present invention is not limited to the exact construction that has been described above and illustrated in the accompanying drawings, and that various modifications and changes can be made without departing from the scope thereof. Graphical object 114 is described for illustrative purposes only. The device and process described herein may be used to adjust any graphical elements of a user interface rendered on a screen, not limited to graphical object 114. It is intended that the scope of the invention only be limited by the appended claims.

## Claims

1. A method for adjusting a graphical object (114) according to operator preference, **characterized in that** it includes a pre configuration phase and an executing phase:
the pre configuration phase being executed before the executing phase, wherein, a value for a pre-configured angle is determined according to motions of a user's hand in the pre configuration phase;
the executing phase including:
S1, rendering a graphical object (114) on a display screen of a handheld device;
S2, determining a preference setting indicating one of a left-handed preference or a right-handed preference for operating the handheld device;
S3, adjusting the graphical object (114) according to the preference setting;
S4, detecting a change to the preference setting; and **characterized in that** the executing phase further comprises:
S5, rotating the graphical object (114) by the pre-configured angle in response to the change;
wherein, the smaller the motion of user's hand is, the smaller the value for the pre-configured angle is; and
the larger the motion of user's hand is, the larger the value for the pre-configured angle is.

2. The method of claim 1, wherein the determining of the preference setting includes receiving a user input indicating the left-handed preference or a right-handed preference.

3. The method of claim 1, wherein the display screen is a touch screen (112), and the determining of the preference setting includes determining the preference setting based on a motion of a finger of a user with respect to the touch screen (112) of the handheld device.

4. The method of claim 3, further comprising determining that the motion is associated with one of a left hand or a right hand of the user.

5. The method of claim 1, further comprising:
detecting that the preference setting is changed to the left-handed preference; and
rotating the graphical object (114) by the predetermined angle to left.

6. The method of claim 1, further comprising:
detecting the preference setting is changed to the right-handed preference; and
rotating the graphical object (114) by the predetermined angle to right.

7. The method of claim 1, further comprising:
rendering a three-dimensional scene including a plurality of graphical objects (114); and
detecting a change of perspective of the three-dimensional scene;
determining the preference setting in response to the change of the perspective; and
adjusting each of the graphical objects (114) according to the preference setting.

8. The method of claim 1, wherein the adjusting of the graphical object (114) includes relocating the graphical object (114) to allow relatively easier access by a user.

9. The method of claim 1, wherein:
the left-handed preference indicates operation by a user using only a left hand; and
the right-handed preference indicates operation by the user using only a right hand.

10. A computer-readable medium including instructions, **characterized in that**, when executed by a processor (102), cause the processor (102) to perform a method for adjusting a graphical object (114) according to operator preference, the method comprising a pre configuration phase and an executing phase:
the pre configuration phase being executed before the executing phase, wherein, a value for a pre-configured angle is determined according to motions of a user's hand in the pre configuration phase;
the executing phase including:
S1, rendering a graphical object (114) on a display screen of a handheld device;
S2, determining a preference setting indicating one of a left-handed preference or a right-handed preference for operating the handheld device;
S3, adjusting the graphical object (114) according to the preference setting;
S4, detecting a change to the preference setting; and **characterized in that** the executing phase further comprises:
S5, rotating the graphical object (114) by the pre-configured angle in response to the change;
wherein, the smaller the motion of user's hand is, the smaller the value for the pre-configured angle is; and
the larger the motion of user's hand is, the larger the value for the pre-configured angle is.

11. The computer-readable medium of claim 10, the method further comprising:
detecting the preference setting is changed to the left-handed preference; and
rotating the graphical object (114) by the predetermined angle to left.

12. The computer-readable medium of claim 10, the method further comprising:
detecting the preference setting is changed to the right-handed preference; and
rotating the graphical object (114) by the predetermined angle to right.

13. The computer-readable medium of claim 10, the method further comprising:
rendering a three-dimensional scene including a plurality of graphical objects (114); and
detecting a change of perspective of the three-dimensional scene;
determining the preference setting in response to the change of the perspective; and
adjusting each of the graphical objects (114) according to the preference setting.

14. The computer-readable medium of claim 10, wherein the adjusting of the graphical object (114) includes relocating the graphical object (114) to allow relatively easier access by a user.

15. The computer-readable medium of claim 10, wherein:
the left-handed preference indicates operation by a user using only a left hand; and
the right-handed preference indicates operation by the user using only a right hand.

16. An apparatus for adjusting a graphical object (114) according to operator preference, **characterized in that** it including:
a storage module (104) configured to store instructions;
an Input module (106) configured to receive user inputs;
an Output module (108) configured to generate a graphical user interface including a plurality of graphical objects (114); and
a processor (102) configured to execute a pre configuration phase and an executing phase:
the pre configuration phase being executed before the executing phase, wherein, a value for a pre-configured angle is determined according to motions of a user's hand in the pre configuration phase;
the executing phase including:
S1, determine a preference setting indicating one of a left-handed preference or a right-handed preference for operating the apparatus;
S2, adjust the graphical objects (114) according to the preference setting;
S3, detect a change to the preference setting; and **characterized in that** the processor is further configured to:
S4, rotate the graphical object (114) by the pre-configured angle in response to the change;
wherein, the smaller the motion of user's hand is, the smaller the value for the pre-configured angle is; and
the larger the motion of user's hand is, the larger the value for the pre-configured angle is.

17. The apparatus of claim 16, wherein the Input module (106) and the Output module (108) include a touch screen (112).

18. The apparatus of claim 16, wherein the graphical objects (114) include a plurality of simulated contact cards, and
the processor (102) is further configured to render the contact cards in an oblique view (206) according to the preference setting.

## Patentansprüche

1. Die Methode, die das Grafikobjekt (114) nach der Bevorzugung des Anwender zu reguliert. Darunter, umfasst diese Methode die Konfiguration der Phase und die Umsetzung der Phase.
Die Konfiguration der Phase führt vor der Umsetzung der Phase aus. Darunter, ist der Wert des vorkonfigurierten Winkel nach in dem Konfiguration der Phase die Bewegung von dem Nutzer der Hände zu bestimmen..
Die Umsetzung der Phase umfasst,
S1, wird das Grafikobjekt (114) auf das Handheld-gerät des Bildschirm angezeigt. S2, bestimmt die Bevorzugung-einstellungen. Die Bevorzugung-einstellungen Anweisungen ist um die Linkshänder Präferenz oder Rechtshänder Präferenz für das Handheld-gerät zu betätigt.
S3, reguliert das Grafikobjekt (114) nach der Bevorzugung-einstellungen.
S4, erkennt die Bevorzugung-einstellungen der Verände, und
seine Merkmal ist, dass die Unsetzung der Phase noch umfasst, S5, kreist das Grafikobjekt (114) beim vorkonfigurierten Winkel als reaktion auf den Wandel, und
darunter, je die Bewegung von dem Nutzer der Hände kleiner ist, desto der vorkonfigurierte Winkel kleiner ist, und
je die Bewegung von dem Nutzer der Hände größer ist, desto der vorkonfigurierten Winkel größer ist.

2. Je nach Anspruch 1 beschriebenen Methode, darunter, umfasst die Bevorzugung-einstellungen des Bestimmen Nutzers Input, die den Nutzer die Linkshänder Präferenz oder die Rechtshänder Präferenz eingibt.

3. Je nach Anspruch 1 beschriebenen Methode, der Schirm ist einen Touchscreen (112), und die Bevorzugung-einstellungen des Bestimmen ist aufgrund der Bewegung von dem Nutzer des Finger in bezug auf das Handheld-gerät des Touchscreen (112).

4. Je nach Anspruch 3 beschriebenen Methode, einschließt noch, bestimmt die Beziehung zwichen die Bewegung und die linke Hand und die rechte Hand von dem Nutzer.

5. Je nach Anspruch 1 beschriebenen Methode, weiter aus, erkennt die Bevorzugung-einstellungen, die in der Linkshänder Präferenz verändert wird, und wird das Grafikobjekt (114) vor der vorgegebenen Winkel nach link gedreht.

6. Je nach Anspruch 1 beschriebenen Methode, weiter aus, erkennt die Bevorzugung-einstellungen, die in der Rechtshänder Präferenz verändert wird, und wird das Grafikobjekt (114) vor der vorgegebenen Winkel nach recht gedreht.

7. Je nach Anspruch 1 beschriebenen Methode, weiter aus, liefert der Dreidimensionalen Szene,die vielzahl von Grafikobjekt (114) umfasst, und erkennt Veränderung von Perspektive von dem Dreidimensionalen Szene.
In reaktion auf die Änderungen der Perspektive bestimmt die Bevorzugung-einstellungen, und
anpasst jeder Grafikobjekt (114) nach die Bevorzugung-einstellungen.

8. Je nach Anspruch 1 beschriebenen Methode,darunter, umfasst die Anpassung von dem Grafikobjekt (114), dass das Grafikobjekt (114) wieder bestimmt, um der Nutzer leichter zu besuchen.

9. Je nach Anspruch 1 beschriebenen Methode, darunter, benutzt der Linkshänder Präferenz nur die linke Hand, und
der Rechtshänder Präferenz benutzt nur die rechte Hand.

10. Ein Computer lesbaren Medium, die Anweisung umfasst, weiter aus , wenn die Anweisung bei dem Prozessor (102) ausführen, macht der Prozessor (102) eine Methode für die Anpassung des Grafikobjekt (114) nach der Bevorzugung von dem Anwender auszuführen.
Die Methode umfasst die Konfiguration der Phase und die Umsetzung der Phase. Die Konfiguration der Phase führt vor der Umsetzung der Phase aus. Darunter, ist der Wert des vorkonfigurierten Winkel nach in dem Konfiguration der Phase die Bewegung von dem Nutzer der Hände zu bestimmen..
Die Umsetzung der Phase umfasst,
S1, wird das Grafikobjekt (114) auf das Handheld-gerät des Bildschirm angezeigt. S2, bestimmt die Bevorzugung-einstellungen. Die Bevorzugung-einstellungen Anweisungen ist um die Linkshänder Präferenz oder Rechtshänder Präferenz für das Handheld-gerät zu betätigt.
S3, reguliert das Grafikobjekt (114) nach der Bevorzugung-einstellungen.
S4, erkennt die Verände der Bevorzugung-einstellungen, und
seine Merkmal ist, dass die Unsetzung der Phase noch umfasst, S5, kreist das Grafikobjekt (114) beim vorkonfigurierte Winkel als reaktion auf den Wandel, und
darunter, je die Bewegung von dem Nutzer der Hände kleiner ist, desto der vorkonfigurierte Winkel kleiner ist, und
je die Bewegung von dem Nutzer der Hände größer ist, desto der vorkonfigurierten Winkel größer ist.

11. Je nach Anspruch 10 beschriebenen Computer lesbaren Medium, die Methode umfasst, erkennt die Bevorzugung-einstellungen, die in der Linkshänder Präferenz verändert wird, und wird das Grafikobjekt (114) vor der vorgegebenen Winkel nach link gedreht.

12. Je nach Anspruch 10 beschriebenen Computer lesbaren Medium, die Methode umfasst, erkennt die Bevorzugung-einstellungen, die in der Rechtshänder Präferenz verändert wird, und wird das Grafikobjekt (114) vor der vorgegebenen Winkel nach recht gedreht.

13. Je nach Anspruch 10 beschriebenen Computer lesbaren Medium, die Methode umfasst, liefert der dreidimensionalen Szene umfasst vielzahl von Grafikobjekt (114), und
erkennt Veränderung von Perspektive von dem Dreidimensionalen Szene.
In reaktion auf die Änderungen der Perspektive bestimmt die Bevorzugung-einstellungen, und
anpasst jeder Grafikobjekt (114) nach die Bevorzugung-einstellungen.

14. Je nach Anspruch 10 beschriebenen Computer lesbaren Medium, die Methode umfasst, darunter, umfasst die Anpassung von dem Grafikobjekt (114), dass das Grafikobjekt (114) wieder bestimmt, um der Nutzer leichter zu besuchen.

15. Je nach Anspruch 10 beschriebenen Computer lesbaren Medium, benutzt die Methode umfasst, der Linkshänder Präferenz nur die linke Hand, und
der Rechtshänder Präferenz benutzt nur die rechte Hand.

16. Eine Anlage, die nach den Anwender der Bevorzugung das Grafikobjekt (114) zu reguliert, seine Markmal ist weiter aus,
Eines Memory Modul (104) wird konfiguriert, dass die Anweisung zu speichert. Eines Input Modul (106) wird konfiguriert, dass den Nutzers Input zu empfangt. Eines Output-Modul (108) wird konfiguriert, dass die Grafische Benutzeroberfläche einschließlich vielzahl von Grafikobjekt (114) zu erzeugt, und Der Prozessor (102) wird konfiguriert, dass die Konfiguration der Phase und die Umsetzung der Phase auszuführt.
Die Konfiguration der Phase führt vor der Umsetzung der Phase aus. Darunter, ist der Wert des vorkonfigurierten Winkel nach in dem Konfiguration der Phase die Bewegung von dem Nutzer der Hände zu bestimmen..
Die Umsetzung der Phase umfasst,
S1, bestimmt die Bevorzugung-einstellungen. Die Bevorzugung-einstellungen Anweisungen ist um die Linkshänder Präferenz oder Rechtshänder Präferenz für das Handheld-gerät zu betätigt.
S2, reguliert das Grafikobjekt (114) nach der Bevorzugung-einstellungen.
S3, erkennt die Verände der Bevorzugung-einstellungen, und
darunter, wird der Prozessor noch konguriert:
S4, kreist das Grafikobjekt (114) beim vorkonfigurierte Winkel als reaktion auf den Wandel, und
darunter, je die Bewegung von dem Nutzer der Hände kleiner ist, desto der vorkonfigurierte Winkel kleiner ist, und
je die Bewegung von dem Nutzer der Hände größer ist, desto der vorkonfigurierten Winkel größer ist.

17. Je nach Anspruch 16 beschriebenen Anlage, darunter, umfassen das Input Modul (106) und das Output-modul (108) den Touchscreen (112).

18. Je nach Anspruch 16 beschriebenen Anlage, darunter, umfasst das Grafikobjekt (114) vielzahl von der simulierten Visitenkarten, und
der Prozessor (102) wird konguliert, dass die Visitenkarten in der Schräge Ansicht (206) nach dem Bevorzugung-einstellungen bietet wird.

## Revendications

1. Procédé pour ajuster un objet graphique (114) en fonction d'une préférence de l'opérateur, **caractérisé en ce qu'**il inclut une phase de préconfiguration et une phase d'exécution :
la phase de préconfiguration étant exécutée avant la phase d'exécution, dans lequel une valeur pour un angle préconfiguré est déterminée en fonction de mouvements d'une main de l'utilisateur dans la phase de préconfiguration ;
la phase d'exécution incluant :
S1, le rendu d'un objet graphique (114) sur un écran d'affichage d'un dispositif portatif ;
S2, la détermination d'un réglage de préférence indiquant une préférence main gauche ou une préférence main droite pour faire fonctionner le dispositif portatif ;
S3, l'ajustement de l'objet graphique (114) en fonction du réglage de préférence ;
S4, la détection d'un changement apporté au réglage de préférence ; et **caractérisé en ce que** la phase d'exécution inclut en plus
S5, la rotation de l'objet graphique (114) de l'angle préconfiguré en réponse au changement ;
dans lequel, plus le mouvement de la main de l'utilisateur est petit, plus la valeur pour l'angle préconfiguré est petite ; et
plus le mouvement de la main de l'utilisateur est grand, plus la valeur pour l'angle préconfiguré est grande.

2. Procédé selon la revendication 1, dans lequel la détermination du réglage de préférence inclut la réception d'une entrée utilisateur indiquant la préférence main gauche ou une préférence main droite.

3. Procédé selon la revendication 1, dans lequel l'écran d'affichage est un écran tactile (112), et la détermination du réglage de préférence inclut la détermination du réglage de préférence sur la base d'un mouvement d'un doigt d'un utilisateur par rapport à l'écran tactile (112) du dispositif portatif.

4. Procédé selon la revendication 3, comprenant en outre le fait de déterminer que le mouvement est associé à la main gauche ou à la main droite de l'utilisateur.

5. Procédé selon la revendication 1, comprenant en outre :
le fait de détecter que le réglage de préférence est changé sur la préférence main gauche ; et
la rotation de l'objet graphique (114) de l'angle prédéterminé vers la gauche.

6. Procédé selon la revendication 1, comprenant en outre :
le fait de détecter que le réglage de préférence est changé sur la préférence main droite ; et
la rotation de l'objet graphique (114) de l'angle prédéterminé vers la droite.

7. Procédé selon la revendication 1, comprenant en outre :
le rendu d'une scène en trois dimensions incluant une pluralité d'objets graphiques (114) ; et
la détection d'un changement de perspective de la scène en trois dimensions ;
la détermination du réglage de préférence en réponse au changement de la perspective ; et
l'ajustement de chacun des objets graphiques (114) en fonction du réglage de préférence.

8. Procédé selon la revendication 1, dans lequel l'ajustement de l'objet graphique (114) inclut la relocalisation de l'objet graphique (114) pour permettre un accès relativement plus facile par un utilisateur.

9. Procédé selon la revendication 1, dans lequel :
la préférence main gauche indique un fonctionnement par un utilisateur n'utilisant que la main gauche ; et
la préférence main droite indique un fonctionnement par un utilisateur n'utilisant que la main droite.

10. Support lisible par ordinateur incluant des instructions, **caractérisées en ce qu'**elles, lorsqu'elles sont exécutées par un processeur (102), amènent le processeur (102) à effectuer un procédé pour ajuster un objet graphique (114) en fonction d'une préférence de l'opérateur, le procédé comprenant une phase de préconfiguration et une phase d'exécution :
la phase de préconfiguration étant exécutée avant la phase d'exécution, dans lequel une valeur pour un angle préconfiguré est déterminée en fonction de mouvements d'une main de l'utilisateur dans la phase de préconfiguration ;
la phase d'exécution incluant :
S1, le rendu d'un objet graphique (114) sur un écran d'affichage d'un dispositif portatif ;
S2, la détermination d'un réglage de préférence indiquant une préférence main gauche ou une préférence main droite pour faire fonctionner le dispositif portatif ;
S3, l'ajustement de l'objet graphique (114) en fonction du réglage de préférence ;
S4, la détection d'un changement apporté au réglage de préférence ; et **caractérisé en ce que** la phase d'exécution comprend en plus
S5, la rotation de l'objet graphique (114) de l'angle préconfiguré en réponse au changement ;
dans lequel, plus le mouvement de la main de l'utilisateur est petit, plus la valeur pour l'angle préconfiguré est petite ; et
plus le mouvement de la main de l'utilisateur est grand, plus la valeur pour l'angle préconfiguré est grande.

11. Support lisible par ordinateur selon la revendication 10, le procédé comprenant en outre :
le fait de détecter que le réglage de préférence est changé sur la préférence main gauche ; et
la rotation de l'objet graphique (114) de l'angle prédéterminé vers la gauche.

12. Support lisible par ordinateur selon la revendication 10, le procédé comprenant en outre :
le fait de détecter que le réglage de préférence est changé sur la préférence main droite ; et
la rotation de l'objet graphique (114) de l'angle prédéterminé vers la droite.

13. Support lisible par ordinateur selon la revendication 10, le procédé comprenant en outre :
le rendu d'une scène en trois dimensions incluant une pluralité d'objets graphiques (114) ; et
la détection d'un changement de perspective de la scène en trois dimensions ;
la détermination du réglage de préférence en réponse au changement de la perspective ; et
l'ajustement de chacun des objets graphiques (114) en fonction du réglage de préférence.

14. Support lisible par ordinateur selon la revendication 10, dans lequel l'ajustement de l'objet graphique (114) inclut la relocalisation de l'objet graphique (114) pour permettre un accès relativement plus facile par un utilisateur.

15. Support lisible par ordinateur selon la revendication 10, dans lequel :
la préférence main gauche indique un fonctionnement par un utilisateur n'utilisant que la main gauche ; et
la préférence main droite indique un fonctionnement par un utilisateur n'utilisant que la main droite.

16. Appareil pour ajuster un objet graphique (114) en fonction d'une préférence de l'opérateur, **caractérisé en ce qu'**il inclut :
un module de stockage (104) configuré pour stocker des instructions ;
un module d'entrée (106) configuré pour recevoir des entrées utilisateur ;
un module de sortie (108) configuré pour générer une interface utilisateur graphique incluant une pluralité d'objets graphiques (114) ; et
un processeur (102) configuré pour exécuter une phase de préconfiguration et une phase d'exécution :
la phase de préconfiguration étant exécutée avant la phase d'exécution, dans lequel une valeur pour un angle préconfiguré est déterminée en fonction de mouvements d'une main de l'utilisateur dans la phase de préconfiguration ;
la phase d'exécution incluant :
S1, la détermination d'un réglage de préférence indiquant une préférence main gauche ou une préférence main droite pour faire fonctionner l'appareil ;
S2, l'ajustement des objets graphiques (114) en fonction du réglage de préférence ;
S3, la détection d'un changement apporté au réglage de préférence ; et **caractérisé en ce que** le processeur est en outre configuré pour :
S4, faire tourner l'objet graphique (114) de l'angle préconfiguré en réponse au changement ;
dans lequel, plus le mouvement de la main de l'utilisateur est petit, plus la valeur pour l'angle préconfiguré est petite ; et
plus le mouvement de la main de l'utilisateur est grand, plus la valeur pour l'angle préconfiguré est grande.

17. Appareil selon la revendication 16, dans lequel le module d'entrée (106) et le module de sortie (108) incluent un écran tactile (112).

18. Appareil selon la revendication 16, dans lequel les objets graphiques (114) incluent une pluralité de cartes de contact simulées, et
le processeur (102) est en outre configuré pour rendre les cartes de contact sur une vue oblique (206) en fonction du réglage de préférence.
